# EUROPEAN PATENT APPLICATION

(11) **EP 2 709 353 A1**
(43) Date of publication of application: **19.03.2014**
(21) Application number: 13184085.2
(22) Date of filing: 12.09.2013
(51) Int. Cl.: H04N 5/232

(54) **Method for displaying camera preview screen in a portable terminal**

(30) Priority: 12.09.2012 KR 20120101091
(71) Applicant: Samsung Electronics Co., Ltd, Gyeonggi-do 443-742 (KR)
(72) Inventor: Jang, Jong-Woon, Suwon (KR); Seo, Jeong-Wook, Suwon (KR)
(74) Representative: Keston, Susan Elizabeth

(57) **Abstract**

A method for displaying a camera preview screen of a portable terminal is provided. The method includes displaying a camera preview screen at the preset output frame rate when starting an image capture mode, confirming whether the output frame rate change condition is satisfied, and displaying the camera preview screen at the changed output frame rate when confirmed that the change condition is satisfied.

## Description

### BACKGROUND OF THE INVENTION

### 1. Field of the Invention:

The present invention relates to a portable terminal which display a preview screen when the portable terminal captures an image by using a camera.

### 2. Description of the Related Art:

There are various types of portable terminals such as smart phones and tablet PCs, and these portable terminals provide various useful functions to users, resulting in widespread usage of portable terminals.

Nowadays mounting a camera module to a portable terminal is common, and accordingly a function of capturing images (still picture images or motion picture videos) using a portable terminal has been widely used.

Since capturing an image in a portable terminal is common, the portable terminal provides various technologies for aiding the capture of images by users. Representative examples may include a method for displaying a preview screen and capturing a subject through the displayed preview screen like a capture with Live View.

The conventional capture method using a preview screen provides a method for easily capturing images by following the movement of the subject to be captured and capturing images while looking at a preview screen displayed via a display device. In addition, since the capture result may be previewed through the preview screen, there is a convenience in capturing images at various angles such as a high angle and a low angle.

However, the conventional capture method using a preview screen displays a preview screen at a fixed frame rate set by a capture application (or a menu), or displays the preview screen at a maximum frame rate (fps: frames per second).

The above information is presented as background information only to assist with an understanding of the present disclosure. No determination has been made, and no assertion is made, as to whether any of the above might be applicable as prior art with regard to the present invention.

### SUMMARY OF THE INVENTION

When the preview screen is displayed in a fixed frame rate or a maximum frame rate, there is an advantage in which the movement of the subject is smoothly displayed on the preview screen. However, since battery consumption of a portable terminal is not taken into consideration, there is a disadvantage in which the operating time of the portable terminal is shortened.

In addition, since the conventional capture method using the preview screen displays a preview screen at a high frame rate or at a maximum frame rate even when the user does not request a capture (for example, when the user does not input a capture button) while the preview screen is displayed, there is a disadvantage in which a battery is unnecessarily consumed.

Further, an effective management of the power resource of a portable terminal is necessary, taking into consideration that the portable terminal has a limited battery capacity, provides various multimedia functions such as a camera capture, multitask applications, or the like.

Therefore, there has been a need for a method and apparatus for preventing the battery from being excessively consumed by displaying the preview screen at a unnecessarily high frame rate or a maximum frame rate at the time of capturing an image with the camera.

It is an aim of certain embodiments of the invention to solve, mitigate or obviate, at least partly, at least one of the problems and/or disadvantages associated with the prior art. Certain embodiments aim to provide at least one of the advantages described below.

Aspects of embodiments of the present invention are to address at least the above-mentioned problems and/or disadvantages and to provide at least the advantages described below. Accordingly, an aspect of embodiments of the present invention is to prevent the battery from being unnecessarily consumed by determining circumstances by which a user uses a camera and to adjust the output frame rates of the preview screen according to the circumstances.

Various respective aspects and features of the invention are defined in the appended claims. Combinations of features from the dependent claims may be combined with features of the independent claims as appropriate and not merely as explicitly set out in the claims.

Another aspect of the invention provides a computer program comprising instructions arranged, when executed, to implement a method in accordance with any one of the above-described aspects. A further aspect provides machine-readable storage storing such a program.

In accordance with an aspect of embodiments of the present invention, a method for displaying a camera preview screen in a portable terminal is provided. The method includes determining whether an output frame rate change condition is satisfied; confirming that the output frame rate change condition is satisfied; and displaying the camera preview screen at a changed output frame rate when confirmed that the output frame rate change condition is satisfied.

In accordance with another aspect of embodiments, a method for displaying a camera preview screen of a portable terminal is provided. The method includes displaying the camera preview screen at a preset output frame rate; checking a type of an image capture mode; and setting the camera preview screen to be displayed at a preset output frame rate in a first level or a preset output frame rate in a second level depending on the checked type of the image capture mode; wherein the first level is higher than the second level.

In accordance with another aspect of embodiments, a method for displaying a camera preview screen of a portable terminal is provided. The method includes determining whether a frame rate change condition is satisfied; selecting a changed frame rate when determined that the condition is satisfied; and displaying the camera preview screen at the selected frame rate.

In accordance with another aspect of embodiments, an apparatus for displaying a camera preview screen of a portable terminal is provided. The apparatus includes a display unit that displays a camera preview screen; and a control unit that performs control so that the camera preview screen is displayed at a preset output frame rate, confirms whether the output frame rate change condition is satisfied, and the camera preview screen is displayed at a changed output frame rate when confirmed that the output frame rate change condition is satisfied.

In accordance with another aspect of embodiments, an apparatus for displaying a camera preview screen of a portable terminal is provided. The apparatus includes a display unit that displays the camera preview screen; and a control unit that performs control so that the camera preview screen is displayed at a preset output frame rate when starting the image capture mode, a type of the image capture mode is checked, and the camera preview screen is set to be displayed at a preset output frame in a first level or at a preset output frame in a second level depending on the checked type of the image capture mode.

The embodiment of the present invention provides advantages to increase the time for using the portable terminal by adjusting the output frame rate of the preview screen according to the circumstance, preventing the battery from being unnecessarily consumed, and minimizing the battery consumption at the time of camera capture causing much consumption of the battery.

One embodiment provides a method for displaying a camera preview screen of a portable terminal, the method comprising:

determining whether an output frame rate change condition is satisfied;

confirming that the output frame rate change condition is satisfied; and

displaying the camera preview screen at a changed output frame rate when confirmed that the output frame rate change condition is satisfied.
Another embodiment provides an apparatus for displaying a camera preview screen of a portable terminal, the apparatus comprising:
a display unit that displays a camera preview screen; and
a control unit that performs control so that the camera preview screen is displayed at a preset output frame rate, confirms whether the output frame rate change condition is satisfied, and the camera preview screen is displayed at a changed output frame rate when confirmed that the output frame rate change condition is satisfied.

Other aspects, advantages, and salient features of embodiments of the invention will become apparent to those skilled in the art from the following detailed description, which, taken in conjunction with the annexed drawings, discloses exemplary embodiments of the invention.

### BRIEF DESCRIPTION OF THE DRAWINGS

Embodiments of the invention will now be described, by way of example only, with reference to the accompanying drawings in which:

FIG. 1 is a block diagram illustrating a portable terminal according to an exemplary embodiment of the present invention;

FIG. 2 is a flowchart illustrating a process of displaying a camera preview screen according to a first exemplary embodiment of the present invention;

FIG. 3A is a first exemplary drawing illustrating the process of displaying the camera preview screen according to the first exemplary embodiment of the present invention;

FIG. 3B is a second exemplary drawing illustrating the process of displaying the camera preview screen according to the first exemplary embodiment of the present invention;

FIG. 3C is a third exemplary drawing illustrating the process of displaying the camera preview screen according to the first exemplary embodiment of the present invention;

FIG. 4 is a flowchart illustrating a process of displaying a camera preview screen according to a second exemplary embodiment of the present invention;

FIG. 5A is a first exemplary diagram illustrating a process of displaying a camera preview screen according to the second exemplary embodiment of the present invention;

FIG. 5B is a second exemplary diagram illustrating the process of displaying the camera preview screen according to the second exemplary embodiment of the present invention; and

FIG. 5C is a third exemplary diagram illustrating the process of displaying the camera preview screen according to the second exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of embodiments of the invention. Accordingly, it should be apparent to those skilled in the art that the following description of exemplary embodiments of the present invention is provided for illustration purpose only and not for the purpose of limiting the embodiments of the invention as defined by the appended claims.

It is to be understood that the singular forms "a," "an," and "the" include plural referents unless the context clearly dictates otherwise. Thus, for example, reference to "a component surface" includes reference to one or more of such surfaces.

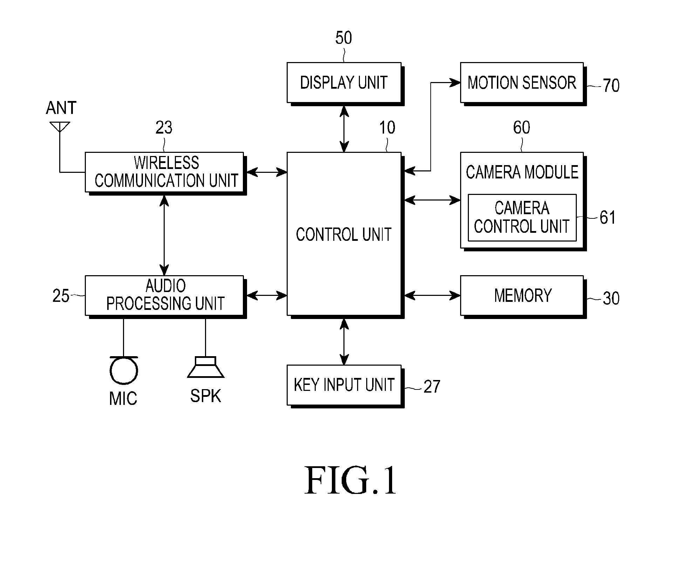

FIG. 1 is a block diagram illustrating a portable terminal according to an exemplary embodiment of the present invention. Referring to FIG. 1, the portable terminal according to the exemplary embodiment of the present invention is described as follows.

First, it is assumed that the portable terminal according to the exemplary embodiment of the present invention is an electronic apparatus that contains a camera and that is easy to carry. An exemplary portable terminal according to the exemplary embodiment of the present invention includes conventional phones and apparatuses (for example, smart phones and tablets) driven by Bada, Tizen, Windows series (for example, Windows 8), iOS, Android, or the like. In addition, a portable terminal according to the exemplary embodiment of the present invention may be a notebook, a digital camera, a video phone, or the like. At this point, it is obvious to those skilled in the art that the portable terminal according to the exemplary embodiment of the present invention is not limited to the apparatuses described above.

A wireless transmitting/receiving unit 23 includes an RF unit and a modem. The RF unit includes an RF transmitter for up-conversion and amplification of frequencies of transmitted signals, and an RF receiver for low-noise amplification of received signals and down-conversion of frequencies, or the like. The modem includes a transmitter for coding and modulating signals to be transmitted, a receiver for demodulating and decoding signals received by the RF unit, or the like.

By using the wireless transmitting/receiving unit 23 according to the exemplary embodiment of the present invention, users may transmit images captured through a preview screen to cloud servers or certain portable terminals.

The audio processing unit 25 may construct codecs, and the codecs may include a data codec and an audio codec. The data codec processes packet data or the like, and the audio codec processes audio signals such as audio files or multimedia files. The audio processing unit 25 converts digital audio signals received by the modem to analog signals via the audio codec to reproduce the converted signals or converts analog audio signals generated by a microphone to digital audio signals via the audio codec to transmit the converted signals to the modem. The codec may be separately provided or may be included in the control unit 10.

The audio processing unit 25 according to the exemplary embodiment of the present invention notifies of a change in a frame rate on a preview screen by providing auditory information (for example, information output from a speaker). In addition, the audio processing unit 25 according to the exemplary embodiment of the present invention, notifies users of a start or an end of image capture by using a preview screen.

A key input unit 27 may include keys required to input number or character information, function keys required for setting various functions, a touch pad, or the like. When a display unit 50 is implemented by a touch screen system, the key input unit 27 may include predetermined minimum keys, and the display unit 50 may substitute for some key input functions of the key input unit 27.

The key input unit 27 according to the exemplary embodiment of the present invention may include a separate key assigned for camera capture, and the separate key for camera capture may provide a half-shutter function for focusing on a subject at the time of camera capture. At this time, the focusing on the subject may be performed by touching a separate key assigned for camera capture or a display screen of the display unit 50 on which a preview screen is displayed.

Meanwhile, according to the exemplary embodiment of the present invention, if the subject is not focused when a preview screen is on display, an output frame rate of the preview screen is decreased according to the exemplary embodiment of the present invention, and after focusing on the subject is completed when the preview screen is on display, the output frame rate of the preview screen can be increased.

A memory 30 may be configured by a program memory and a data memory, and the program memory stores programs for controlling general operations of portable terminals. The memory 30 may further include an external memory such as Compact Flash (CF), Secure Digital (SD), Micro Secure Digital (Micro-SD), Mini Secure Digital (Mini-SD),Extreme Digital (xD), or Memory Stick. In addition, the memory 30 may include disks such as Hard Disk Drive (HDD) and Solid State Disk (SSD).

The display unit 50 may include Liquid Crystal Display (LCD), Organic Light Emitting Diodes (OLED) such as PMOLED or AMOLED, or the like, and outputs various display information generated by the portable terminal. The display unit 50 may include a touch screen such as a capacitive touch screen, a resistive touch screen, and an electromagnetic induction touch screen. Therefore, the display unit 50 can operate as an input unit for controlling the portable terminal together with the key input unit 27.

The display screen of the display unit 50 according to the exemplary embodiment of the present invention may display a preview screen in a camera capture mode, and users can identify a subject input through the camera module 60 through the preview screen.

In addition, through a touch screen of the display unit 50 according to the exemplary embodiment of the present invention, the user may select a certain area of the preview screen where the subject is on display (for example, by a touch input corresponding to the area) so as to focus on or capture a subject corresponding to the certain area. In addition, using the touch screen of the display unit 50, the user may request the results (for example, still images) captured through the camera module 60 to be displayed.

The camera module 60 converts light signals input (or captured) through the lens to electric video image signals and outputs the converted video image signals, and users may capture images such as video images or still images. The camera module 60 may include one or more of the following: a lens (not illustrated) that condenses light and transmits the condensed light to a camera sensor, a camera sensor (not illustrated) that converts light signals captured at the time of image capture to electric image signals, a camera memory (not illustrated) that can store the captured images temporarily, a flash (not illustrated) that provides a proper amount of light depending on the surrounding circumstances at the time of capture, and a camera control unit 61 that controls entire operations of the camera module 60 and converts the analog image signals captured by the camera sensors to digital data.

The lens may be configured by one or more lenses, and the camera sensor may be a CCD sensor, a CMOS sensor, or the like and the camera control unit 61 may be implemented by an Image Signal Processor (ISP), or a Digital Signal Processor (DSP). At this time, the camera sensor and the camera control unit 61 may be implemented in an integrated manner or in a separate manner.

The flash is a camera accessory that uses discharge light that is momentarily generated when high tension direct current flows in a xenon discharge tube as a light source for capturing an image, and is generally known as "Strobo". However, this is a product name, and the "Strobo" is also known as an electronic flash or a speed flash. A layer-built dry cell is mainly used for power supply and the power is boosted to be a required high voltage. The flash may come in a clip-on type with guide numbers of 14 to 30 or a clip type with guide numbers of 30 to 50. Duration time is as short as 1/1,000 sec and as bright as white light (natural light). Therefore, the flash serves as a main light source of artificial light.

The camera control unit 61 controls the camera module 60 so that images captured (or input) through the lens, the camera sensor, or the like are output as images for capturing to the control unit 10.

The camera control unit 61 captures images according to settings (for example, a capture resolution), and includes a codec for compressing the captured images into a format appropriate to be processed by the control unit 10 of the portable terminal. For example, the camera control unit 61 may include a code that can compress images into a still image format such as a Joint Photographic coding Experts Group (JPEG) format, or a video image format such as a Moving Picture Experts Group (MPEG) format.

Therefore, the camera control unit 61 may perform control so that the images compressed to the JPEG, the MPEG format, or the like by the above-described codec are output to the control unit 10 of the portable terminal. Therefore, the images captured in the exemplary embodiment of the present invention are images that are captured according to settings (for example, settings relating to capture such as a resolution, an aperture value, and an exposure value) selected by users by inputting a capture key, and that are compressed (or converted) into a format such as a JPEG format or an MPEG format that can be processed by the control unit 10.

Meanwhile, the camera control unit 61 controls the camera module 60 so that images input through the lens, the camera sensor, or the like are converted for the preview screen and are output to the control unit 10. For example, the camera control unit 61 performs control so that image signals input through the camera sensor or the like are converted into digital data, converts the converted digital data into a YUV format appropriate for the display on the preview screen, and outputs the converted digital data to the control unit 10. The control unit 10 performs control so that the converted digital data is received and the converted digital data is output through the display unit 50. Herein, the YUV format is configured by a luminance Y component and chrominance U (Cb) and V (Cr) components to express pixels. Since the YUV format enables transmission with a narrower bandwidth than a general RGB format, it is appropriate to display images for a preview of a subject to be captured like the preview screen.

Meanwhile, the camera control unit 61 according to the exemplary embodiment of the present invention performs control so that information on the set output frame rate is received from the control unit 10, and then images (for example, images to be displayed on the preview screen) appropriate for a preview are output to the control unit 10 based on the settings (for example, a set changed output frame rate). For example, the camera control unit 61 according to the exemplary embodiment of the present invention performs control so that images input through the lens, the camera sensor, or the like are converted to a format appropriate for the preview screen (for example, the YUV format) at the set output frame rate, and the converted images are output to the control unit 10. Thereafter, the control unit 10 performs control so that images converted to a format appropriate for the preview screen and received from the camera control unit 61 are output to the display unit 50 at the set output frame rate.

A motion sensor 70 is a device for sensing motions of the portable terminal, and may be implemented by including at least one of a gyro sensor, an acceleration sensor, and a geomagnetic sensor. Using the motion sensor 70, the control unit 10 performs control so that it is confirmed (sensed) whether the portable terminal moves more than the predetermined range or not and the output frame rate of the preview screen is set (selected) according to the confirmation.

The control unit 10 controls entire operations of the portable terminals according to the exemplary embodiment of the present invention, and changes or controls the operation of the portable terminal according to the user input which is input by the key input unit 27 or the display unit 50. Meanwhile, the control unit 10 controls a series of operations for changeably adjusting the output frame rate of the preview screen at the time of image capture so that the usage of a battery (not illustrated) having a limited capacity is efficiently managed.

For example, the control unit 10 controls a series of operations relating to a method for displaying a camera preview screen of the portable terminal including: displaying a preview screen at a preset output frame rate when starting an image capture mode; confirming whether an output frame rate change condition is satisfied; and setting the changed output frame rate when it is confirmed that the change condition is satisfied according to the confirmation; and setting the preview screen to be displayed at the set changed output frame rate. The detailed operations of the control unit 10 according to the exemplary embodiment of the present invention will be described as follows.

Meanwhile, apparatuses that can be included in the portable terminal such as a Bluetooth module, a Wi-Fi module, a proximity sensor, and a Digital Media Broadcasting (DMB) receiver are not illustrated in the block diagram of FIG. 1. However, it is obvious to those skilled in the art that the apparatuses not illustrated in the drawings can be included in the portable terminal and provide the corresponding functions.

For example, while the preview screen is displayed in the image capture mode, when the approach of an object (for example, a part of the body of a user) is sensed through a proximity sensor, the function for displaying the preview screen at a preset output frame rate in the low level according to the exemplary embodiment of the present invention may be provided.

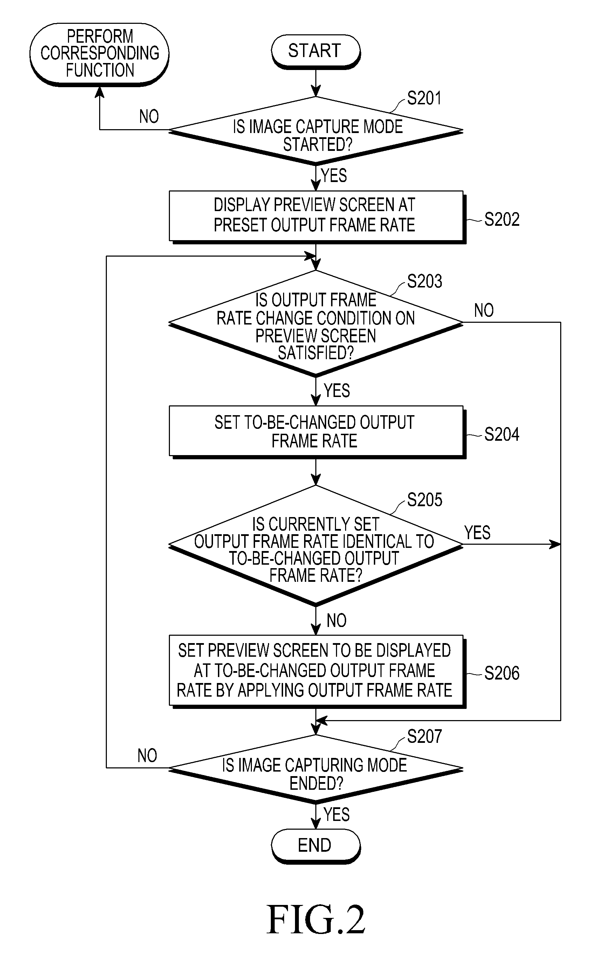

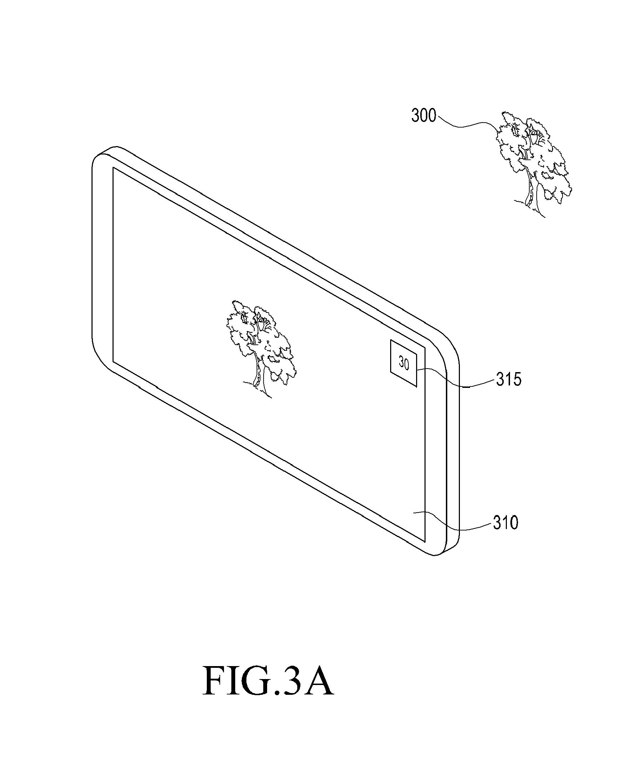

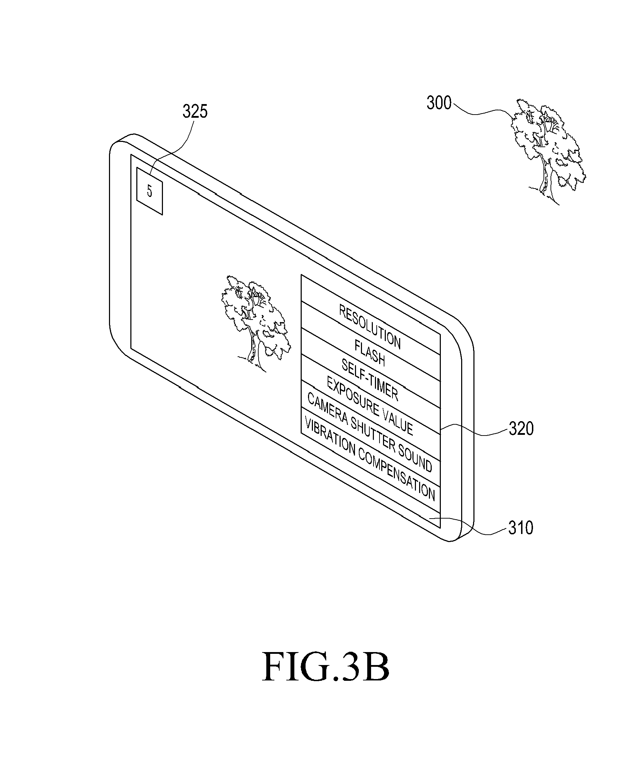

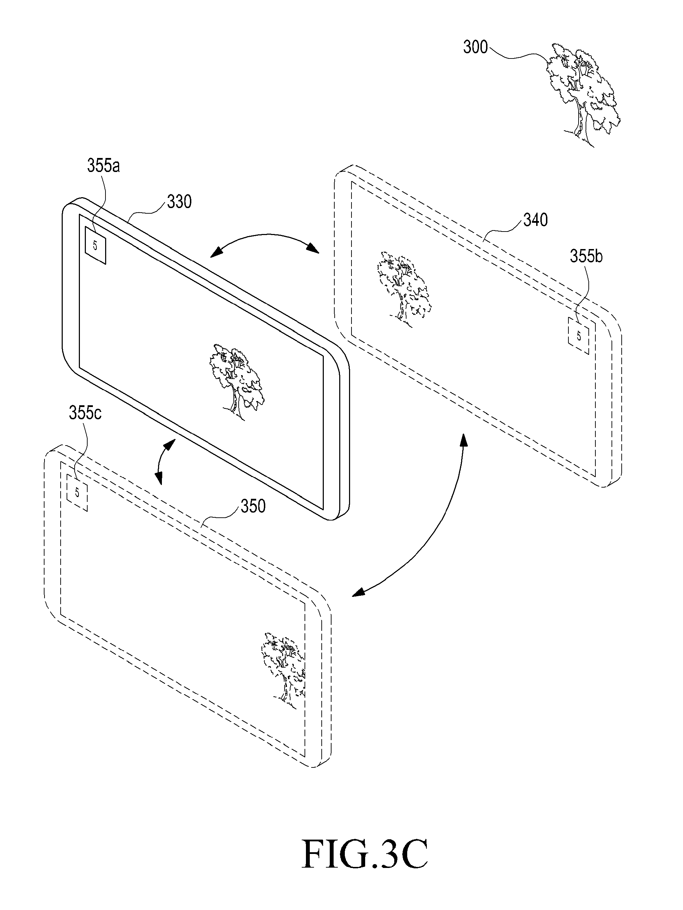

FIG. 2 is a flowchart illustrating steps for displaying a preview screen of a camera according to a first exemplary embodiment of the present invention, FIG. 3A is a first exemplary diagram illustrating the process for displaying the preview screen of the camera according to a first exemplary embodiment of the present invention, FIG. 3B is a second exemplary diagram illustrating the process for displaying the preview screen of the camera according to a first exemplary embodiment of the present invention, and FIG. 3C is a third exemplary diagram illustrating the process for displaying the preview screen of the camera according to a first exemplary embodiment of the present invention. With reference to the drawings, the exemplary embodiment of the present invention is described as follows.

In steps S201 and S202, the control unit 10 performs control so that the preview screen is displayed at the preset output frame rate when starting an image capture mode. For example, the preset output frame rate could initially be set to a frame rate at a higher level such as a frame rate that allows movement of a subject to be smoothly displayed on the preview screen.

According to the request of a user, when the start of the camera capture mode is requested (for example, a request for executing a camera application), the control unit 10 controls the camera control unit 61 so that the camera module 60 is driven.

Thereafter, the camera control unit 61 performs control so that images input through the lens, the camera sensor, or the like of the camera module 60 are converted to a format appropriate for displaying on the preview screen at the preset output frame rate (for example, converts the images to a YUV format) and the converted images are output to the control unit 10. Thereafter, the control unit 10 performs control so that the images converted to the format appropriate for displaying the preview screen are processed (for example, resized) to be appropriate for the resolution of the display unit 50 and the converted images are output through the preview screen of the display unit 50 at the preset output frame rate.

Referring to FIG. 3A, for example, when the user executes the camera application in order to capture the subject 300, the control unit 10 performs control so that the subject 300 is displayed through the preview screen 310 at the preset output frame rate as described above.

Herein, the preset output frame rate can be understood as an output frame rate preset as a default setting, and may have various values according to exemplary embodiments, but in the exemplary embodiment of the present invention, it is assumed that the preset output frame rate has a value of 15 fps or 30 fps. For example, FIG. 3A illustrates the preset output frame rate as 30 fps as in 315.

Meanwhile, in the exemplary embodiment of the present invention, in a case of displaying the preview screen, the output frame rate of the currently displayed preview screen may be displayed. For example, as illustrated in FIG. 3A, when the preview screen is displayed at the preset output frame rate according to the start of the camera capture mode, the output frame rate of the currently displayed preview screen may be displayed as in 315 of FIG. 3A. Accordingly, the user may easily check the output frame rate of the currently displayed preview screen.

Meanwhile, in the exemplary diagrams including FIG. 3A, it is illustrated that the preview screen 310 occupies most of the display screen 310, but this illustration is for the sake of convenience of the description and it is obvious to those skilled in the art that the preview screen may be changed, for example, to occupy a part of the display screen according to the modification of the exemplary embodiment.

In step S203 to S204, the control unit 10 performs control so that it is confirmed whether or not the output frame rate change condition is satisfied, and the changed output frame rate is set when the output frame rate change condition is satisfied.

As described in the previous steps and FIG. 3A, after the start of the image capture mode, when the preview screen is displayed at the preset output frame rate, the user may prepare for image capture by moving the portable terminal or loading a menu.

For example, the user may set a capture composition or select a subject by moving the portable terminal to be prepared for image capture. In addition, as another example, the user may complete settings (for example, an aperture value, a shutter speed, and an exposure value) for image capture by using the menu to be prepared for the image capture.

Accordingly, in consideration of general image capture circumstances, when the user moves the portable terminal or the menu is displayed on the display screen (or the preview screen), it may be considered that the image capture is being prepared, that is, it may finally be assumed that the preparation for the image capture is not completed. Accordingly, an exemplary embodiment of the present invention provides a function for preventing (compensating) the problem that the preview screen is displayed at a high output frame rate before the preparation for the image capture is completed so that consumption of a battery (not illustrated) of the portable terminal can be minimized or at least reduced.

Therefore, the exemplary embodiment of the present invention includes displaying the preview screen at the preset output frame rate in the previous steps S201 to S202, determining whether the output frame rate change condition is satisfied, and setting (selecting) the changed output frame rate when it is determined that the output frame rate change condition is satisfied.

In the exemplary embodiment of the present invention, the satisfaction on the output frame rate change condition of the preview screen is described with two examples: one illustrated in FIG. 3B and the other illustrated in FIG. 3C.

Referring to FIG. 3B, the output frame rate change condition on the preview screen according to the exemplary embodiment of the present invention is as follows.

As illustrated in FIG. 3B, when a menu for changing the settings relating to the camera capture (image capture) is displayed, it is determined that the output frame rate change condition on the preview screen is satisfied in the exemplary embodiment of the present invention.

Referring to FIG. 3B, the menu 320 is displayed following a request of the user so that the user may set a resolution of the image capture, set an operation of a flash, set a time for a self-timer, set an exposure value of the image capture, set a camera shutter sound at the time of image capture, and set whether to apply vibration compensation.

Therefore, the control unit 10 determines that the user is preparing for the image capture, when a display of the menu as illustrated in FIG. 3B is requested by input through the key input unit 27 or the touch screen of the display unit 50 to display the menu. Accordingly, the control unit 10 determines that the output frame rate change condition of the preview screen is satisfied, when it is determined that the image capture is being prepared (that the preparation of the image capture is not completed).

Referring to FIG. 3C, the output frame rate change condition of a preview screen according to the exemplary embodiment of the present invention is described as follows.

The user may move the portable terminal in every direction in order to set up the capture composition, adjust the distance from the subject in order to set photographing angle of view, and adjust the position of the portable terminal as illustrated in 330, 340, and 350 of the FIG. 3C in order to select a subject.

The control unit 10 according to the exemplary embodiment of the present invention determines that the preparation for the image capturing is not completed when it is detected by the motion sensor 70 that the portable terminal moves more than the predetermined range on the image capture mode as illustrated in 330, 340, and 350 of FIG. 3C. Accordingly, the control unit 10 confirms that the output frame rate change condition of the preview screen is satisfied. At this time, it is obvious to those skilled in the art that the predetermined scope relating to the movement of the portable terminal can be changed in degree for preferable implementation of the exemplary embodiment.

From the description above, when it is confirmed that the output frame rate change condition of the preview screen is satisfied, the control unit 10 performs control so that the changed output frame rate is set to any one of output frames in the low level.

As described above, the confirmation that the output frame rate change condition of the preview screen is satisfied indicates that the preparation of the image capturing is not completed, and this indicates that the output frame rate of the preview screen set to a low fps does not cause trouble in the image capturing.

Therefore, the control unit 10 according to the exemplary embodiment of the present invention performs control so that the changed output frame is set to any one (for example, 5 fps) of output frame rates from 1 fps to 15 fps corresponding to output frame rates in the low level.

Meanwhile, it has been described that the output frame rate in the low level is any one of output frame rates from 1 fps to 15 fps and the output frame rate at a high scope is any one of output frame rates more than 16 fps, but it is obvious to those skilled in the art that this can be changed in implementing the exemplary embodiment.

Meanwhile, according to the confirmation in step 203, if the control unit 10 confirms that the output frame rate change condition is not satisfied (for example, that the preparation for the image capturing is completed), the control unit 10 according to the exemplary embodiment of the present invention may perform control so that the preview screen is displayed at any one of output frame rates in the high level (for example, output frame rates higher than 16 frames).

At this time, by modifying the exemplary embodiment of the present invention, the preview screen displayed at the output frame rate in the high level may be displayed at the preset output frame rate described in step S202. For example, the output frame rate in the high level may be any one of output frame rates among the frame rates higher than 16 fps, for example, an output frame rate of 30 fps as illustrated in 315 of FIG. 3A.

In steps S205 to S207, the control unit 10 performs control so that it is confirmed whether the currently set output frame rate is identical to the changed output frame rate, the display screen is set to be displayed at the changed output frame rate when it is determined that they are not identical, the display screen is displayed at the changed output frame rate, and the previous steps are repeated until the image capture mode ends.

The menu 320 relating to the camera capture as illustrated in FIG. 3B may be displayed until the camera capture mode ends, and the menu may not be displayed thereafter, or the portable terminal may keep moving as illustrated in FIG. 3C.

Therefore, the output frame rate of the preview screen may not be repeatedly changed when a menu such as the menu 320 in FIG. 3B is displayed, or the portable terminal keeps moving.

For example, when a menu such as the menu 320 in FIG. 3B is displayed and the preview screen is displayed at an output frame rate in the low level (for example, 5 fps), the change of the output frame rate to an output frame rate in the low level may be an unnecessary process only because the portable terminal keeps moving as illustrated in FIG. 3C.

Therefore, the control unit 10 according to the exemplary embodiment of the present invention performs control so that the currently set output frame rate is compared with the changed output frame rate, and the preview screen is set to be displayed at the set changed output frame rate only when the currently set output frame rate and the changed output frame rate are different from each other.

The control unit 10 may perform control so that information on the changed output frame rate is transmitted to the camera control unit 61, and accordingly the camera control unit 61 outputs an image appropriate for the preview screen (for example, an image to be displayed through the preview screen) at the changed output frame rate to the control unit 10.

For example, the camera control unit 61 according to the exemplary embodiment of the present invention performs control so that images input through the lens, the camera sensors, or the like at the output frame rate that is set according to the exemplary embodiment of the present invention (the changed output frame rate) are converted to a format appropriate for the preview screen (for example, a YUV format), and the converted images are output to the control unit 10. Thereafter, the control unit 10 performs control so that the images received from the camera control unit 61 (for example, images converted to a format appropriate for the preview screen) are output through the display unit 50 at the output frame rate that is set according to the exemplary embodiment of the present invention (for example, the changed output frame rate).

According to the first exemplary embodiment of the present invention described above, when the menu 320 is displayed as illustrated in FIG. 3B or the portable terminal moves more than the predetermined range as illustrated in FIG. 3C, the output frame rate of the preview screen may be 5 fps (an output frame rate at the low level) as illustrated in 325 or 355a to 355c.

According to the first exemplary embodiment as described above, when the image capture is being prepared (when the menu is being displayed or the portable terminal moves as described above), the process load for displaying the preview screen may be minimized or at least reduced so as to reduce the consumption of the battery (not illustrated) and reduce heat generation.

Meanwhile, the step S205 may not be provided in a modified exemplary embodiment of the present invention.

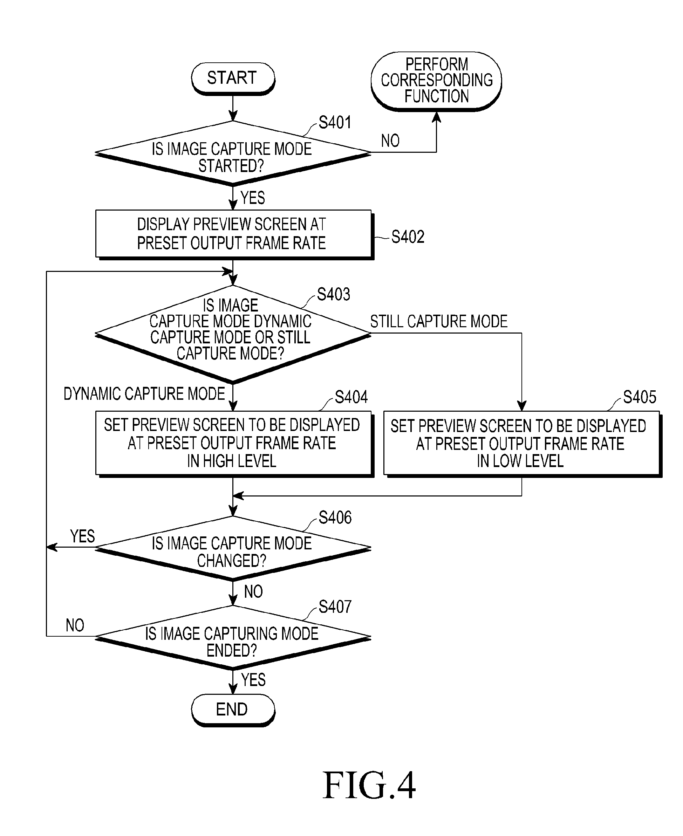

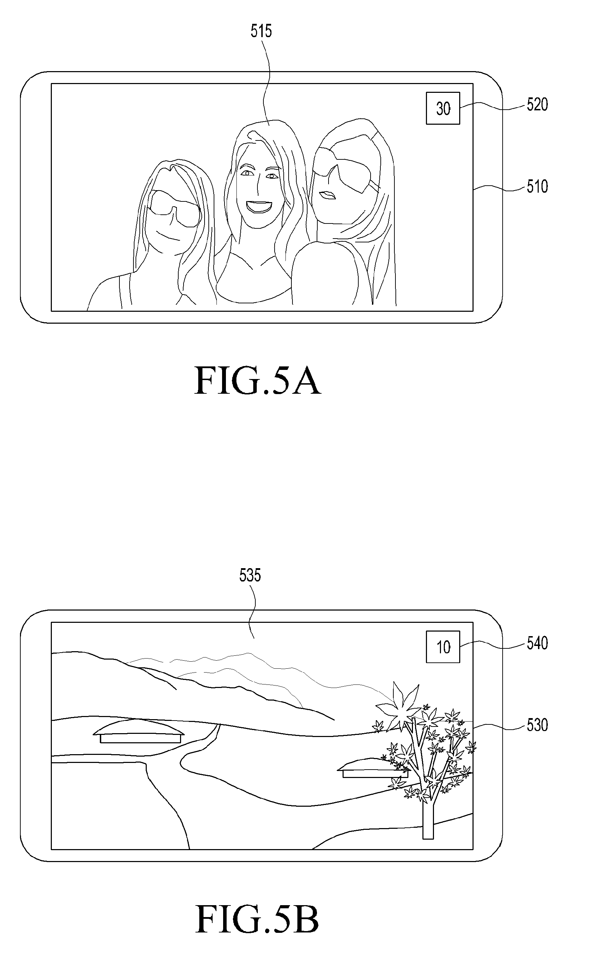

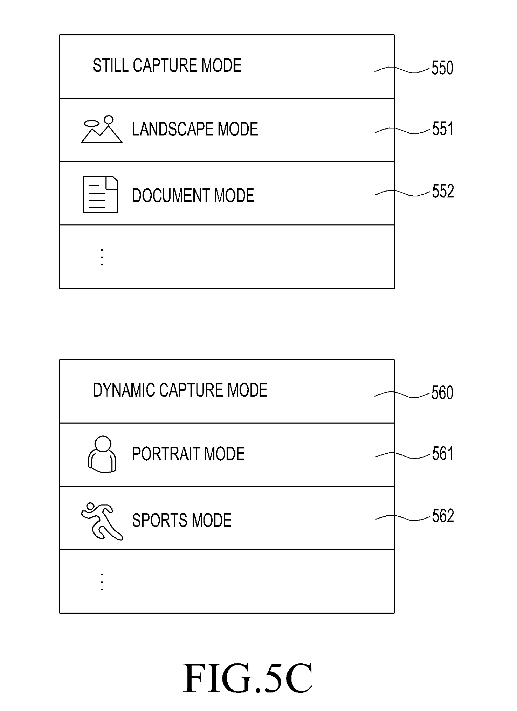

FIG. 4 is a flowchart illustrating steps for displaying a preview screen of the camera according to a second exemplary embodiment of the present invention. FIG. 5A is a first exemplary diagram illustrating steps for displaying the preview screen of the camera according to the second exemplary embodiment of the present invention. FIG. 5B is a second exemplary diagram illustrating steps for displaying the preview screen of the camera according to the second exemplary embodiment of the present invention. FIG. 5C is a third exemplary diagram illustrating steps for displaying the preview screen of the camera according to the second exemplary embodiment of the present invention. With reference to the drawings, the second exemplary embodiment is described as follows.

In steps S401 to S402, a control unit 10 performs control so that the preview screen is displayed at the preset output frame rate when starting an image capture mode.

The detailed descriptions of steps S401 to S402 will not be provided since they may be understood by the descriptions of steps S201 to S202.

In steps S403 to S405, the control unit 10 checks a type of the image capture mode, and sets the preview screen to be displayed at a preset output frame rate in the higher level relatively or a preset output frame rate in the lower level relatively depending on the type of the checked image capture mode.

The image capture mode described in the second exemplary embodiment of the present invention may include a still capture mode and a dynamic capture mode. The dynamic capture mode corresponds to a capture mode in which the movement of a subject is faster relatively and the still capture mode corresponds to a capture mode in which the movement of a subject is slower relatively.

Referring to FIG. 5C, the still capture mode 550 includes a landscape mode 551 in which the movement of a subject is slow and capturing is performed with a high aperture value like a natural landscape and a document mode 552 in which the movement of a subject is very little. At this time, the still capture mode 550 may include capture modes in addition to the landscape mode 551 and the document mode 552 illustrated in FIG. 5C, and the example may be an extended exposure mode for capturing images with an extended exposure (slow shutter speed) in order to capture a subject in the dark.

In addition, the dynamic capture mode 560 may include a portrait mode 561 for capturing a subject such as a human that blinks his/her eyes and has frequent changes in facial expressions, a sports mode 562 for capturing a subject that moves at high speed, for example, in a sporting event, or the like. At this time, the dynamic capture mode 560 may include capture modes in addition to the portrait mode 561 and the sports mode 562 illustrated in FIG. 5C.

As described above, when image capture is performed in the still capture mode 560 for capturing a subject that moves slowly, it is not necessary for the subject to be displayed on the preview screen at a high output frame rate. In contrast, when the preview screen is displayed at a low output frame rate in the dynamic capture mode 560 for capturing a subject that moves quickly, it is difficult to check the exact movement of the subject to be captured, and therefore it is necessary for the subject to be displayed in the preview screen at a high output frame rate.

Therefore, the control unit 10 according to the exemplary embodiment of the present invention sets the preview screen to be displayed at a preset output frame rate in the high level, when it is confirmed that the image capture mode is the dynamic capture mode 560. Thereafter, the control unit 10 may perform control so that the preview screen is displayed at the preset output frame rate in the high level by reflecting the setting.

Referring to FIG. 5A, when the subject 515 is a human, for example, it is necessary for the change of the facial expression to be promptly displayed on the preview screen 510. Therefore, the control unit 10 performs control so that the preview screen 510 is set to be displayed at a preset output frame rate in the high level (for example, 30 fps), and then the preview screen 510 is displayed at an output frame rate of 30 fps as illustrated in 520. The user may check the movement of the subject 515 through the preview screen 510 and also check the currently applied (outputting) output frame rate 520 of the preview screen.

In addition, the control unit 10 according to the exemplary embodiment of the present invention sets the preview screen 510 to be displayed at a preset output frame rate in the low level when it is checked that the image capture mode is the still capture mode. Thereafter, the control unit 10 performs control so that the preview screen 510 is displayed at the preset output frame rate in the low level by reflecting the setting.

Referring to FIG. 5B, when the subject 535 is a natural landscape, for example, since the subject slowly moves, there is no problem in slowly reflecting the change in movement of the subject on the preview screen 530. Therefore, the control unit 10 performs control so that the preview screen 530 is set to be displayed at the preset output frame rate in the low level (for example 10 fps) in the still capture mode, and then the preview screen 530 is displayed at the output frame rate of 10 fps as illustrated in 540. The user may check the currently applied (outputting) output frame rate 540 of the preview screen 530, while checking the movement of the subject 535 through the preview screen 530.

Meanwhile, the preset output frame rate in the low level according to the second exemplary embodiment of the present invention may include any one of output frame rates from 1 fps to 15 fps, and the preset output frame rate in the high level may include any one of output frame rates of 16 fps or higher. Therefore, it is obvious to those skilled in the art that the preset output frame rate in the high level is not limited to 30 fps and the preset output frame rate in the low level is not limited to 10 0 fps.

In steps S406 to S407, the control unit 10 performs control so that the previous steps are repeated until the image capture mode is changed or the image capture mode ends.

The control unit 10 according to the exemplary embodiment of the present invention performs control so that the preview screen is set to be displayed at the preset output frame rate in the high level or at the preset output frame rate in the low level depending on the type of image capture mode until the image capture mode ends, and then the preview screen is displayed at the set output frame rate.

The exemplary embodiment of the present invention described above may provide advantages to increase the time for using the portable terminal by adjusting the output frame rate of the preview screen according to the circumstance, preventing the battery from being unnecessarily consumed, and minimizing the battery consumption at the time of capturing an image with the camera.

While the invention has been shown and described with reference to certain exemplary embodiments thereof, it will be understood by those skilled in the art that various changes in form and details may be made therein without departing from the scope of the invention as defined by the appended claims and their equivalents.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method for displaying a camera preview screen of a portable terminal, the method comprising:
setting an output frame rate of the camera preview screen wherein the output frame rate depends upon one of:
i. determining whether an output frame rate change condition is satisfied (S203); and
ii. checking a type of image capture mode (S403) such that the output frame rate is set to a first level or a second level depending on the checked type of image capture wherein the first level is higher than the second level; and
displaying the preview screen (S202, S204; S404, S405) at the set output frame rate.

2. The method of claim 1, wherein the camera preview screen is displayed at a preset output frame rate when starting an image capture mode.

3. The method of claim 1 or claim 2, wherein the setting depends upon determining whether an output frame rate change condition is satisfied and the method further comprises the step of confirming that the output frame rate change condition is satisfied by:
confirming that the output frame rate change condition is satisfied when confirmed that a preparation of image capture in an image capture mode is not completed; and
confirming that the output frame rate change condition is not satisfied when it confirmed that the preparation of image capture in the image capture mode is completed.

4. The method of claim 3, wherein the confirming that the output frame rate change condition is satisfied further comprises:
confirming that the preparation of the image capture is not completed when at least one of : (i) it is determined that a menu is being displayed; and (ii) the portable terminal moves more than a predetermined range; and
confirming that the preparation of the image capture is completed when any one of the conditions is not detected.

5. The method of any one of claims 1 to 4, wherein the output frame rate is set by determining whether an output frame rate change condition is satisfied, the method further comprising:
displaying the changed output frame rate on the camera preview screen.

6. The method of any one of claims 1 to 5, wherein the output frame rate is set depending upon determining whether an output frame rate change condition is satisfied , the method further comprising:
continuously displaying the camera preview screen at a preset output frame rate when confirmed that the change condition is not satisfied.

7. The method of claim 6, wherein the preset output frame rate includes any one of output frame rates in a high level.

8. The method of claim 7, wherein the output frame rates in the high level include any one of output frame rates of 16 fps or more.

9. The method of any one of claims 1 to 6, wherein the output frame rate is set depending upon determining whether an output frame rate change condition is satisfied and wherein the displaying of the camera preview screen at the changed output frame rate comprises:
selecting any one of output frame rates in a low level when confirmed that the output frame rate change condition is satisfied and setting the selected output frame rate to the changed output frame rate; and
displaying the camera preview screen at the changed output frame rate.

10. The method of claim 9, wherein the output frame rates in the low level includes any one of output frame rates from 1 fps to 15 fps.

11. The method of claim 1, wherein the output frame rate is set depending upon determining whether an output frame rate change condition is satisfied and wherein the displaying of the camera preview screen at the changed output frame rate comprises:
comparing a currently set output frame rate with the changed output frame rate; and
displaying the camera preview screen at the changed output frame rate when the currently set output frame rate and the changed output frame rate are different from each other.

12. An apparatus for displaying a camera preview screen of a portable terminal, the apparatus comprising:
a display unit (50) that displays a camera preview screen; and
a control unit (10) that performs control so that the camera preview screen is displayed at a preset output frame rate, wherein the preview output frame rate is set depending upon one of :
i. the control unit (10) confirming whether the output frame rate change condition is satisfied, and the camera preview screen is displayed at a changed output frame rate when confirmed that the output frame rate change condition is satisfied; and
ii. the control unit (10) checking the type of image capture mode when starting the image capture mode and setting the camera preview screen to be displayed at a preset output frame in a first level or a preset output frame in a second level depending on the checked type of the image capture mode.

13. The apparatus of claim 12, wherein the control unit performs control so that the camera preview screen is displayed at the preset output frame rate when starting the image capture mode, and the preset output frame rate is displayed on the camera preview screen.

14. The apparatus of claim 12 or claim 13, wherein the control unit (10) confirms that the output frame rate change condition is satisfied when confirmed that the preparation of the image capture is not completed in the image capture mode, and
confirms that the output frame rate change condition is not satisfied when confirmed that the preparation of the image capture is completed in the image capture mode.

15. The apparatus of any one of claims 12 to 14, wherein the control unit (10) confirms that the preparation of the image capture is not completed when any one of conditions is detected in which a menu is being displayed and the portable terminal moves more than a predetermined range, and confirms that the preparation of the image capture is completed when any one of the conditions is not detected.
